(19) Europäisches Patentamt
European Patent Office
Office européen des brevets

(11) **EP 4 750 198 A1**

(12) **EUROPEAN PATENT APPLICATION**
published in accordance with Art. 153(4) EPC

(43) Date of publication:
**27.05.2026 Bulletin 2026/22**

(51) International Patent Classification (IPC):
**H04W 72/0453** (2023.01)    **H04W 72/04** (2023.01)

(21) Application number: **24844387.1**

(22) Date of filing: **31.05.2024**

(86) International application number:
**PCT/CN2024/096580**

(87) International publication number:
**WO 2025/020692 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023   CN 202310922412**

(71) Applicant: **ZTE Corporation
Shenzhen, Guangdong  518057 (CN)**

(72) Inventors:
• **HE, Haigang
Shenzhen, Guangdong 518057 (CN)**
• **LU, Youxiong
Shenzhen, Guangdong 518057 (CN)**
• **BI, Feng
Shenzhen, Guangdong 518057 (CN)**
• **CHEN, Jie
Shenzhen, Guangdong 518057 (CN)**
• **MIAO, Ting
Shenzhen, Guangdong 518057 (CN)**

(74) Representative: **Vossius & Partner
Patentanwälte Rechtsanwälte mbB
Siebertstraße 3
81675 München (DE)**

(54) **RESOURCE DETERMINING METHOD, DEVICE AND STORAGE MEDIUM**

(57)      Provided are a resource determining method, a device and a storage medium. A resource determining method applied to a first communication device includes: receiving a physical sidelink shared channel (PSSCH) in a resource pool; determining a mapping relationship between a sub-channel and a physical sidelink feedback channel (PSFCH) resource; and determining a PSFCH resource associated with at least one sub-channel included in the received PSSCH based on the mapping relationship between the sub-channel and the PSFCH resource, where one PSFCH resource includes at least one resource block within one interlace.

Receive a PSSCH in a resource pool — S110

Determine a mapping relationship between a sub-channel and a PSFCH resource — S120

Determine a PSFCH resource associated with at least one sub-channel included in the received PSSCH based on the mapping relationship between the sub-channel and the PSFCH resource, where one PSFCH resource includes at least one resource block within one interlace — S130

**FIG. 1**

EP 4 750 198 A1

**Description**

TECHNICAL FIELD

The present application relates to the field of communications, for example, a resource determining method, a device and a storage medium.

BACKGROUND

In sidelink (SL) communication, the determination of physical sidelink feedback channel (PSFCH) resources is based solely on the Intelligent Transport System (ITS) spectrum utilized by the sidelink communication and the licensed spectrum allocated to network operators. However, in the scenario where the sidelink communication utilizes the unlicensed spectrum and is performed in the presence of interlaces, how to determine PSFCH resources remains an urgent issue to be solved.

SUMMARY

Embodiments of the present application provide a resource determining method, a device and a storage medium, which enable the use of unlicensed spectrum for sidelink communication and the determination of PSFCH resources in the presence of interleaving.

The embodiments of the present application provide a resource determining method. The resource determining method is applied to a first communication device and includes the following.

A physical sidelink shared channel (PSSCH) is received in a resource pool; a mapping relationship between a sub-channel and a PSFCH resource is determined; and a PSFCH resource associated with at least one sub-channel included in the received PSSCH is determined based on the mapping relationship between the sub-channel and the PSFCH resource, where one PSFCH resource includes at least one resource block (RB) within one interlace.

The embodiments of the present application provide a resource determining method. The resource determining method is applied to a second communication device and includes the following.

A PSSCH is sent in a resource pool; a mapping relationship between a sub-channel and a PSFCH resource is determined; and a PSFCH resource associated with at least one sub-channel included in the sent PSSCH is determined based on the mapping relationship between the sub-channel and the PSFCH resource, where one PSFCH resource includes at least one RB within one interlace.

The embodiments of the present application provide a communication device. The communication device includes a memory and one or more processors.

The memory is configured to store one or more programs. When the one or more programs are executed by the one or more processors, the one or more processors are caused to perform the resource determining method provided in any one of the preceding embodiments.

The embodiments of the present application provide a storage medium storing a computer program which, when executed by a processor, causes the processor to perform the resource determining method provided in any one of the preceding embodiments.

BRIEF DESCRIPTION OF DRAWINGS

FIG. 1 is a flowchart of a resource determining method according to an embodiment of the present application;

FIG. 2 is a flowchart of another resource determining method according to an embodiment of the present application;

FIG. 3 is a schematic diagram of the communication interaction between a first user equipment and a second user equipment according to an embodiment of the present application;

FIG. 4 is a schematic diagram of the ordering of RBs with intra-interlace ordering followed by inter-interlace ordering according to an embodiment of the present application;

FIG. 5 is a schematic diagram of the configuration of PSFCH RB mapping and a PSFCH numbering rule according to an embodiment of the present application;

FIG. 6 is a schematic diagram of the numbering of PSFCHs in ascending order of interlace indices according to an embodiment of the present application;

FIG. 7 is a schematic diagram of the mapping relationship between PSFCH resource numbers and RBs according to an embodiment of the present application;

FIG. 8 is a schematic diagram of the mapping relationship between PSFCH resource numbers and RBs according to an embodiment of the present application;

FIG. 9 is a block diagram of a resource determining apparatus according to an embodiment of the present application;

FIG. 10 is a block diagram of another resource determining apparatus according to an embodiment of the present application; and

FIG. 11 is a structure diagram of a communication device according to an embodiment of the present application.

DETAILED DESCRIPTION

Embodiments of the present application are described hereinafter in conjunction with drawings. The present application is described hereinafter in conjunction with embodiments and drawings. The examples illustrated are intended to explain the present application.

The communication device in the embodiments of the present application may be called a communication node or a user equipment (UE).

In a sidelink communication system, when service needs to be transmitted between UEs, the service between UEs is not forwarded by a network side, that is, the service is not forwarded through cellular links between the UEs and a base station but is directly transmitted from a data source UE to a target UE through a sidelink. Such a direct communication mode between UEs is significantly different from the conventional cellular system communication mode. The typical applications of sidelink communication include device-to-device (D2D) communication and vehicle-to-everything (V2X) communication. The V2X communication includes vehicle-to-vehicle (V2V) communication, vehicle-to-pedestrian (V2P) communication, and vehicle-to-infrastructure (V2I) communication. For the users who may apply sidelink communication to perform near-field communication, in addition to saving wireless spectrum resources, sidelink communication may also reduce the transmission pressure of a core network, reduce the occupation of system resources, and increase the spectral efficiency of a cellular communication system, thereby reducing the communication delay and greatly lowering network operation costs. In sidelink communication, a terminal device may monitor the occupancy status of resources within a resource pool, and autonomously select a resource for sending the signaling or data from the resource pool according to the monitoring result.

Transmission may be performed only on a channel with a Listen Before Talk (LBT) success in the unlicensed spectrum. The "LBT" means that a communication node needs to contend for resources and only when the contention for time-frequency resources succeeds can the communication node transmit information on the time-frequency resources. In the LBT mechanism, the communication node performs a channel access procedure (to listen to whether a channel is idle) before information transmission, and the communication node can transmit information only when the listened channel is idle.

Only the ITS spectrum utilized by the sidelink communication and the licensed spectrum allocated to network operators are taken into consideration for the method for determining PSFCH resources in sidelink communication. The 3rd Generation Partnership Project (3GPP) has not yet established a method for determining PSFCH resources in the unlicensed spectrum for sidelink communication. The present application provides a resource determining method to address the issues in the determination of PSFCH resources in the unlicensed spectrum, specifically in the presence of interlaces.

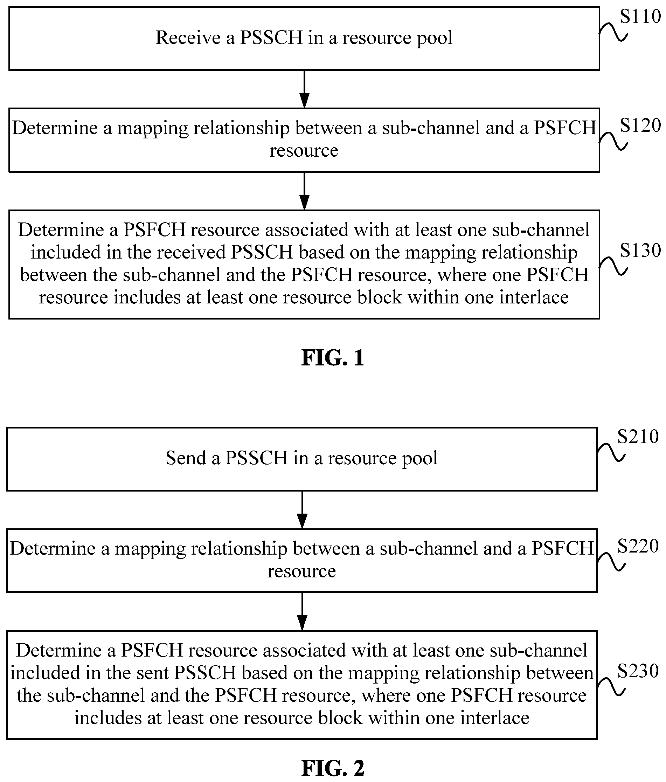

In an embodiment, FIG. 1 is a flowchart of a resource determining method according to an embodiment of the present application. This embodiment is applied to the scenario of PSFCH resource determination in the presence of interlaces. This embodiment may be executed by a first communication device. In this embodiment of the present application, the first communication device may also be a first UE. As shown in FIG. 1, this embodiment includes S110 to S130.

In S110, a PSSCH is received in a resource pool.

In S120, a mapping relationship between a sub-channel and a PSFCH resource is determined.

In S130, a PSFCH resource associated with at least one sub-channel included in the received PSSCH is determined based on the mapping relationship between the sub-channel and the PSFCH resource, where one PSFCH resource includes at least one RB within one interlace.

In this embodiment, the first communication device receives a PSSCH in a resource pool, determines a mapping relationship between a sub-channel and a PSFCH resource, and determines the PSFCH resources associated with one or more sub-channels included in the received PSSCH based on the mapping relationship between the sub-channel and the PSFCH resource. It is to be understood that the mapping relationship between all sub-channels and PSFCH resources is determined first, and then the PSFCH resources associated with one or more sub-channels included in the received PSSCH are determined. In an embodiment, the sequential order between the operation of determining the mapping relationship between the sub-channel and the PSFCH resource and the operation of receiving the PSSCH in the resource pool is not limited here, that is, the PSSCH may be first received in the resource pool, and then the mapping relationship between the sub-channel and the PSFCH resource is determined; the mapping relationship between the sub-channel and the PSFCH resource may be first determined, and then the PSSCH is received in the resource pool; or both process of receiving the PSSCH and the process of determining the mapping relationship between the sub-channel and the PSFCH resource may be simultaneously executed. After the first communication device determines the PSFCH resources associated with one or more sub-channels included in the received PSSCH, the first communication device sends feedback information on the determined at least one PSFCH resource.

In an embodiment, one interlace includes one set of RBs distributed at an equal RB interval within one frequency domain range, where the one frequency domain range includes at least one of: multiple RB sets within a frequency domain range corresponding to one resource pool; all RB sets within a frequency domain range corresponding to one resource pool; multiple RB sets within one bandwidth part (BWP); all RB sets within one BWP; or one RB set. In this embodiment, the "equal RB interval" means that the number of RBs included in each set of RBs is equal.

In an embodiment, an $\overline{mm}$-th PSFCH resource within one interlace includes at least one RB within one interlace, which includes the following case.

The $\overline{mm}$-th PSFCH resource within one interlace includes $[\overline{mm} * K1, (\overline{mm} + 1) * K1 - 1]$-th RBs within one interlace, where $K1$ represents the number of RBs included in one PSFCH resource. In an example, $\overline{mm}$ is numbered from 0.

In an embodiment, the $\overline{mm}$-th PSFCH resource within one interlace includes at least one RB within one interlace, which includes the following case.

For an even $\overline{mm}$, the $\overline{mm}$-th PSFCH resource corresponds to $\{I_E \times K1, I_E \times K1 + 1, I_E \times K1 + 2, ..., (I_E + 1) \times K1 - 1\}$-th RBs within an interlace $m$, where $I_E = \overline{mm}/2$, and $K1$ represents the number of RBs included in one PSFCH resource. The "even $\overline{mm}$" means that the value of $\overline{mm}$ is an even number.

In an embodiment, the $\overline{mm}$-th PSFCH resource within one interlace includes at least one RB within one interlace, which includes the following case.

The $\overline{mm}$-th PSFCH resource within one interlace includes

$$\left\{\overline{mm}, M_{\text{interlace}}^{\text{PSFCH}} + \overline{mm}, 2M_{\text{interlace}}^{\text{PSFCH}} + \overline{mm}, 3M_{\text{interlace}}^{\text{PSFCH}} + \overline{mm}, ..., (K1 - 1) \cdot M_{\text{interlace}}^{\text{PSFCH}} + \overline{mm}\right\}$$ -th RBs within one interlace, where $\overline{mm} \in \left\{0, 1, ..., M_{\text{interlace}}^{\text{PSFCH}} - 1\right\}$, $K1$ is a positive integer and represents the number of RBs included in one PSFCH resource, and $M_{\text{interlace}}^{\text{PSFCH}}$ is a positive integer and represents the number of PSFCH resources included within one interlace.

In an embodiment, the operation of determining the mapping relationship between the sub-channel and the PSFCH resource includes the operation of allocating a PSFCH resource to one sub-channel in one slot, which includes the following operation. $\left[k \cdot M_{\text{subch, slot}}^{\text{PSFCH}}, (k + 1) \cdot M_{\text{subch, slot}}^{\text{PSFCH}} - 1\right]$-th PSFCH resources are allocated from one set of PSFCH resources to a sub-channel $j$ in a slot $i$, or PSFCH resources numbered $\left[k \cdot M_{\text{subch, slot}}^{\text{PSFCH}}, (k + 1) \cdot M_{\text{subch, slot}}^{\text{PSFCH}} - 1\right]$ are allocated from one set of PSFCH resources to the sub-channel $j$ in the slot $i$, where $k = i + j \cdot N_{\text{PSSCH}}^{\text{PSFCH}}$, $N_{\text{PSSCH}}^{\text{PSFCH}}$ is equal to a period of a PSFCH, and $M_{\text{subch, slot}}^{\text{PSFCH}}$ is a positive integer.

In an embodiment, the operation of determining the mapping relationship between the sub-channel and the PSFCH resource includes the operation of allocating at least one PSFCH RB to one sub-channel in one slot, which includes the following operation. $\left[(k) \cdot \left(M_{\text{subch, slot}}^{\text{PSFCH}} * K1\right), (k + 1) \cdot \left(M_{\text{subch, slot}}^{\text{PSFCH}} * K1\right) - 1\right]$-th PSFCH RBs are allocated from one set of PSFCH RBs to the sub-channel $j$ in the slot $i$, or PSFCH RBs numbered $\left[(k) \cdot \left(M_{\text{subch, slot}}^{\text{PSFCH}} * K1\right), (k + 1) \cdot \left(M_{\text{subch, slot}}^{\text{PSFCH}} * K1\right) - 1\right]$ are allocated from one set of PSFCH RBs to the sub-channel *j* in the slot *i*, where $k = i + j \cdot N_{\text{PSSCH}}^{\text{PSFCH}}$, $N_{\text{PSSCH}}^{\text{PSFCH}}$ is equal to a period of a PSFCH, $M_{\text{subch, slot}}^{\text{PSFCH}}$ is a positive integer, and one PSFCH resource includes *K*1 PSFCH RBs.

In an embodiment, the one set of PSFCH RBs is one set of ordered PSFCH RBs.

In an embodiment, before the mapping relationship between the sub-channel and the PSFCH resource is determined, the method further includes the following operation.

One set of PSFCH RBs are ordered according to a preset rule.

In an embodiment, the operation of ordering one set of PSFCH RBs according to the preset rule includes at least one of the following operations.

All PSFCH RBs within each interlace in one interlace set are sequentially ordered according to an interleaving order; or *K*1 PSFCH RBs within each interlace in one interlace set are sequentially ordered in ascending order of interlace indices, and the ordering operation is performed once or the ordering operation is repeated multiple times.

In an embodiment, the operation of determining the mapping relationship between the sub-channel and the number of the PSFCH resource includes the operation of numbering the PSFCH resource according to a preset rule, which includes at least one of the following operations.

All PSFCH resources within each interlace in one interlace set are sequentially numbered according to an interleaving order; or one PSFCH resource within each interlace in one interlace set is sequentially numbered in ascending order of interlace indices, and the numbering operation is performed once or the numbering operation is repeated multiple times.

In an embodiment, one PSFCH resource including at least one RB within one interlace and the number of the one PSFCH resource and the number of the interlace having a mapping relationship include the following case.

A PSFCH resource numbered *mm* among one set of PSFCH resources includes at least one RB within an interlace *m*, where the relationship between *mm* and *m* includes $m = floor(mm/M_{\text{interlace}}^{\text{PSFCH}})$, $M_{\text{interlace}}^{\text{PSFCH}}$ represents the number of PSFCHs included within the one interlace, and *floor*(·) represents rounding down.

In an embodiment, the one PSFCH resource including the at least one RB within the one interlace includes the following case.

A PSFCH resource numbered *mm* among one set of PSFCH resources includes an $\overline{mm}$-th PSFCH resource within the one interlace, where the relationship between *mm* and $\overline{mm}$ includes

$$\overline{mm} = mod(mm, M_{\text{interlace}}^{\text{PSFCH}}),\quad M_{\text{interlace}}^{\text{PSFCH}}$$ represents the number of PSFCH resources included within the one

interlace, and $mod(mm, M_{\text{interlace}}^{\text{PSFCH}})$ represents a remainder when *mm* which is an integer is divided by $M_{\text{interlace}}^{\text{PSFCH}}$ which is an integer.

In an embodiment, FIG. 2 is a flowchart of another resource determining method according to an embodiment of the present application. This embodiment is applied to the scenario of PSFCH resource determination in the presence of interlaces. This embodiment may be executed by a second communication device. As shown in FIG. 2, this embodiment includes S210 to S230.

In S201, a PSSCH is sent in a resource pool.

In S220, a mapping relationship between a sub-channel and a PSFCH resource is determined.

In S230, a PSFCH resource associated with at least one sub-channel included in the sent PSSCH is determined based on the mapping relationship between the sub-channel and the PSFCH resource, where one PSFCH resource includes at least one RB within one interlace.

In an embodiment, one interlace includes one set of RBs distributed at an equal RB interval within one frequency domain range, where the one frequency domain range includes at least one of: multiple RB sets within a frequency domain range corresponding to one resource pool; all RB sets within a frequency domain range corresponding to one resource pool; multiple RB sets within one BWP; all RB sets within one BWP; or one RB set.

In an embodiment, an $\overline{mm}$-th PSFCH resource within one interlace includes at least one RB within one interlace, which includes the following case.

The $\overline{mm}$-th PSFCH resource within the one interlace includes [$\overline{mm}$ * *K*1, ($\overline{mm}$ + 1) * *K*1 - 1]-th RBs within the one interlace, where *K*1 represents the number of RBs included in one PSFCH resource.

In an embodiment, the $\overline{mm}$-th PSFCH resource within one interlace includes at least one RB within one interlace, which includes the following case.

For an even $\overline{mm}$, the $\overline{mm}$-th PSFCH resource corresponds to {$I_E \times K1, I_E \times K1 + 1, I_E \times K1 + 2,..., (I_E + 1) \times K1 - 1$}-th RBs within an interlace *m*, where $I_E = \overline{mm}/2$, and K1 represents the number of RBs included in one PSFCH resource.

In an embodiment, the $\overline{mm}$-th PSFCH resource within one interlace includes at least one RB within one interlace, which includes the following case.

The $\overline{mm}$ -th PSFCH resource within one interlace includes $\left\{\overline{mm}, M_{\text{interlace}}^{\text{PSFCH}} + \overline{mm}, 2M_{\text{interlace}}^{\text{PSFCH}} + \overline{mm}, 3M_{\text{interlace}}^{\text{PSFCH}} + \overline{mm}, \ldots, (K1 - 1) \cdot M_{\text{interlace}}^{\text{PSFCH}} + \overline{mm}\right\}$ -th RBs within one interlace, where $\overline{mm} \in \left\{0,1,\ldots, M_{\text{interlace}}^{\text{PSFCH}} - 1\right\}$, K1 is a positive integer and represents the number of RBs included in one PSFCH resource, and $M_{\text{interlace}}^{\text{PSFCH}}$ is a positive integer and represents the number of PSFCH resources included within one interlace.

In an embodiment, the operation of determining the mapping relationship between the sub-channel and the PSFCH resource includes the operation of allocating a PSFCH resource to one sub-channel in one slot, which includes the following operation. $\left[k \cdot M_{\text{subch, slot}}^{\text{PSFCH}}, (k + 1) \cdot M_{\text{subch, slot}}^{\text{PSFCH}} - 1\right]$ -th PSFCH resources are allocated from one set of PSFCH resources to a sub-channel $j$ in a slot $i$, or PSFCH resources numbered $\left[k \cdot M_{\text{subch, slot}}^{\text{PSFCH}}, (k + 1) \cdot M_{\text{subch, slot}}^{\text{PSFCH}} - 1\right]$ are allocated from one set of PSFCH resources to the sub-channel $j$ in the slot $i$, where $k = i + j \cdot N_{\text{PSSCH}}^{\text{PSFCH}}$, $N_{\text{PSSCH}}^{\text{PSFCH}}$ is equal to a period of a PSFCH, and $M_{\text{subch, slot}}^{\text{PSFCH}}$ is a positive integer.

In an embodiment, the operation of determining the mapping relationship between the sub-channel and the PSFCH resource includes the operation of allocating at least one PSFCH RB to one sub-channel in one slot, which includes the following operation. $\left[(k) \cdot \left( M_{\text{subch, slot}}^{\text{PSFCH}} * K1\right), (k + 1) \cdot \left( M_{\text{subch, slot}}^{\text{PSFCH}} * K1\right) - 1\right]$ -th PSFCH RBs are allocated from one set of PSFCH RBs to the sub-channel $j$ in the slot $i$, or PSFCH RBs numbered $\left[(k) \cdot \left( M_{\text{subch, slot}}^{\text{PSFCH}} * K1\right), (k + 1) \cdot \left( M_{\text{subch, slot}}^{\text{PSFCH}} * K1\right) - 1\right]$ are allocated from one set of PSFCH RBs to the sub-channel $j$ in the slot $i$, where $k = i + j \cdot N_{\text{PSSCH}}^{\text{PSFCH}}$, $N_{\text{PSSCH}}^{\text{PSFCH}}$ is equal to a period of a PSFCH, $M_{\text{subch, slot}}^{\text{PSFCH}}$ is a positive integer, and one PSFCH resource includes $K1$ PSFCH RBs.

In an embodiment, the one set of PSFCH RBs is one set of ordered PSFCH RBs.

In an embodiment, before the mapping relationship between the sub-channel and the PSFCH resource is determined, the method further includes the following operation.

One set of PSFCH RBs are ordered according to a preset rule.

In an embodiment, the operation of ordering one set of PSFCH RBs according to the preset rule includes at least one of the following operations.

All PSFCH RBs within each interlace in one interlace set are sequentially ordered according to an interleaving order; or $K1$ PSFCH RBs within each interlace in one interlace set are sequentially ordered in ascending order of interlace indices, and the ordering operation is performed once or the ordering operation is repeated multiple times.

In an embodiment, the operation of determining the mapping relationship between the sub-channel and the number of the PSFCH resource includes the operation of numbering the PSFCH resource according to a preset rule, which includes at least one of the following operations.

All PSFCH resources within each interlace in one interlace set are sequentially numbered according to an interleaving order; or one PSFCH resource within each interlace in one interlace set is sequentially numbered in ascending order of interlace indices, and the numbering operation is performed once or the numbering operation is repeated multiple times.

In an embodiment, one PSFCH resource including at least one RB within one interlace and the number of the one PSFCH resource and the number of the interlace having a mapping relationship include the following case: a PSFCH resource numbered *mm* among one set of PSFCH resources includes at least one RB within an interlace *m*, where the relationship between *mm* and *m* includes $m = floor(mm/M_{\text{interlace}}^{\text{PSFCH}})$, $M_{\text{interlace}}^{\text{PSFCH}}$ represents the number of PSFCHs included within the one interlace, and *floor*($\cdot$) represents rounding down.

In an embodiment, the one PSFCH resource including the at least one RB within the one interlace includes the following case.

A PSFCH resource numbered *mm* among one set of PSFCH resources includes an $\overline{mm}$-th PSFCH resource within the one interlace, where the relationship between *mm* and $\overline{mm}$ includes

$$\overline{mm} = mod(mm, M_{\text{interlace}}^{\text{PSFCH}}), \quad M_{\text{interlace}}^{\text{PSFCH}}$$ represents the number of PSFCH resources included within the one

interlace, and $mod(mm, M_{\text{interlace}}^{\text{PSFCH}})$ represents a remainder when *mm* which is an integer is divided by $M_{\text{interlace}}^{\text{PSFCH}}$ which is an integer.

For the explanation of all the related parameters involved in the resource determining method applied to the second communication device, reference may be made to the description of the corresponding parameters in the resource determining method applied to the first communication device, and the details are not repeated here.

In the following embodiments, the determination procedure of PSFCH resources, the relationship between RBs and interlaces, the description of the meaning of various variables, the ordering of PSFCH RBs, the mapping relationship between PSFCH numbers and PSFCH RBs, the mapping relationship between sub-channels and PSFCH numbers, and the mapping relationship among PSFCH numbers, interlace numbers, and the RB numbers within interlaces in the presence of interlaces are described through different examples.

Example one

In an example, operations executed by the first communication device include the following operations.

A PSSCH is received in a resource pool; a mapping relationship between a sub-channel and a PSFCH resource is determined; PSFCH resources associated with at least one sub-channel included in the received PSSCH are determined based on the mapping relationship between the sub-channel and the PSFCH resource; and a PSFCH is sent on one or more PSFCH resources among the determined PSFCH resources.

The PSFCH resource refers to a PSFCH resource for transmitting a hybrid automatic repeat request acknowledgement (HARQ-ACK) or conflict indication information. The PSFCH resource for transmitting HARQ-ACK or conflict indication information may also be referred to as a dedicated PSFCH resource.

In an example, one PSFCH resource element includes *K*1 RBs, and the *K*1 RBs included in one PSFCH resource element are RBs belonging to the same interlace.

In an example, one interlace includes a set of RBs distributed at an equal interval of several RBs, and any two adjacent RBs within the set of RBs are spaced by *I* RBs, where *I* is an integer greater than or equal to 5. In one particular case, *I* = 10. In another particular case, *I* = 5.

In an example, one PSFCH resource element includes *K*1 RBs, and any two adjacent RBs among the *K*1 RBs are spaced by JRBs, where *J* is an integer not less than 5. In one particular case, *J* = 10. In another particular case, *J* = 5.

In an example, the operation of determining the mapping relationship between the sub-channel and the PSFCH resource is characterized as the operation where the first communication device allocates a PSFCH resource to a sub-channel.

In an example, the operation of allocating a PSFCH resource to a sub-channel includes the operation of allocating a PSFCH resource to a sub-channel in a slot.

In an example, the operation of allocating a PSFCH resource to a sub-channel in a slot includes the following operation: $\left[k \cdot M_{\text{subch, slot}}^{\text{PSFCH}}, (k+1) \cdot M_{\text{subch, slot}}^{\text{PSFCH}} - 1\right]$ -th PSFCH resource elements are allocated to (slot *i*, sub-channel j), where $k = i + j \cdot N_{\text{PSSCH}}^{\text{PSFCH}}$, one PSFCH resource element includes *K*1 RBs, the *K*1 RBs included in one PSFCH resource element are RBs belonging to the same interlace, and $M_{\text{subch, slot}}^{\text{PSFCH}}$ represents the number of PSFCH resource elements corresponding to or allocated to a sub-channel in a slot.

In an example, a PSFCH resource associated with a sub-channel *j* included in a received PSSCH includes a PSFCH resource associated with/allocated to the slot number *i* and the sub-channel *j* of the received PSSCH.

In an example, the first UE sends a PSFCH on one or more PSFCH resources among the PSFCH resources determined by the first UE itself, and the PSFCH is used for indicating HARQ-ACK or conflict indication information of the received PSSCH.

In an example, the HARQ-ACK includes both ACK and NACK states, or the HARQ-ACK includes only one state of NACK, where ACK is an acknowledgement for indicating that PSSCH is received correctly, and NACK is a negative acknowledgement for indicating that PSSCH is received incorrectly.

In an example, in addition to sending the PSFCH on the determined PSFCH resources, the first UE also sends a signal/channel on at least one common interlace. Sending the signal/channel on the common interlace is used for channel occupancy, and/or the common interlace is used for sending a PSFCH-like signal/channel. The PSFCH-like signal/channel is not a dedicated PSFCH, that is, the PSFCH-like signal/channel is not used for indicating HARQ-ACK information or conflict indication information.

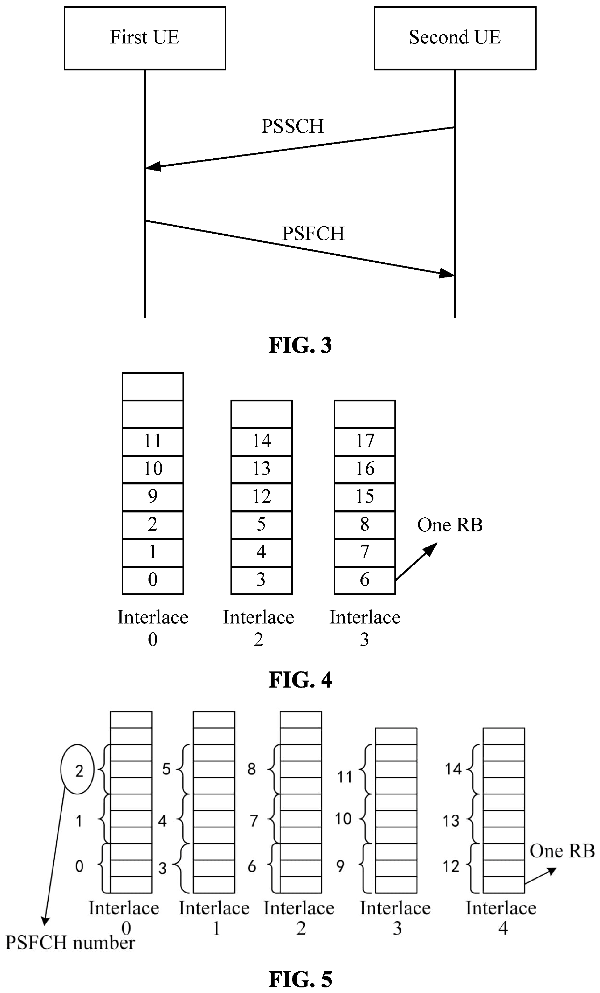

FIG. 3 is a schematic diagram of the communication interaction between the first UE and the second UE according to an embodiment of the present application. The interaction process of PSSCH transmission and PSFCH transmission between the first UE and the second UE is shown in FIG. 3. The second UE sends a PSSCH to the first UE, and the second UE receives a PSFCH sent by the first UE, where the PSFCH is used for indicating HARQ-ACK or conflict indication information for the PSSCH.

Example two

In an example, the RB includes at least one of the following: a common RB, a physical RB, a virtual RB, and an interlace RB.

In an example, for a subcarrier spacing configuration $\mu$, the common RBs are numbered from 0 in the frequency domain. For the subcarrier spacing configuration $\mu$, the center of the sub-carrier 0 in the common RB 0 coincides with 'point A'.

The relationship between the number $n_{\text{CRB}}^{\mu}$ of the common RB in the frequency domain and the resource element ($k, l$) configured for the subcarrier spacing $\mu$ is given by the following equation:

$$n_{\text{CRB}}^{\mu} = \left\lfloor \frac{k}{N_{\text{sc}}^{\text{RB}}} \right\rfloor .$$

In the above equation, $k$ is relative to the point A and is defined such that when $k = 0$, $k$ corresponds to a sub-carrier centered on the point A.

In an example, the physical RBs of the subcarrier spacing configuration $\mu$ are defined within a BWP, numbered from 0 to $N_{\text{BWP},i}^{\text{size},\mu} - 1$, where $i$ denotes the number of BWPs. The relationship between the physical RB $n_{\text{PRB}}^{\mu}$ in the BWP $i$ and the common RB $n_{\text{CRB}}^{\mu}$ is given by the following equation: $n_{\text{CRB}}^{\mu} = n_{\text{PRB}}^{\mu} + N_{\text{BWP},i}^{\text{start},\mu}$, where $N_{\text{BWP},i}^{\text{start},\mu}$ is the start common RB in the BWP $i$ relative to the common RB 0. The exponent $\mu$ may decrease in the absence of risk of confusion.

In an example, the virtual RBs are defined within the BWP, numbered from 0 to $N_{\text{BWP},i}^{\text{size}} - 1$, where $i$ is the number of the BWP.

Multiple interlaces are defined within one RB, where the interlace $m \in \{0, 1, \ldots, M\text{-}1\}$ consists of common RBs {$m$, $M + m$, $2M + m$, $3M + m$, ...}, where $M$ denotes the number of interlaces. The relationship among the interleaved RB $n_{\text{IRB},m}^{\mu} \in \{0, 1, \ldots\}$ in the BWP $i$, the interlace $m$, and the common RB $n_{\text{CRB}}^{\mu}$ is given by the following equation:

$$n_{\text{CRB}}^{\mu} = M n_{\text{IRB},m}^{\mu} + N_{\text{BWP},i}^{\text{start},\mu} + \left( \left( m - N_{\text{BWP},i}^{\text{start},\mu} \right) \bmod M \right).$$

In the above equation, $N_{\text{BWP},i}^{\text{start},\mu}$ is the start common RB in the BWP relative to the common RB 0. The exponent $\mu$ may decrease in the absence of risk of confusion.

The UE expects that the number of common RBs included in one interlace within the BWP $i$ is not less than 10.

$\mu = 0$ and $\mu = 1$ correspond to the subcarrier spacing of 15 kHz and the subcarrier spacing of 30 kHz, respectively.

In an example, one interlace may also be referred to as an RB interlace. One interlace includes a set of RBs distributed at an equal RB interval within one frequency domain range.

In an example, the relationship between the subcarrier spacing configuration $\mu$ and the number $M$ of interlaces is shown in Table 1.

Table 1 Number of RB interlaces

| $\mu$ | $M$ |
|---|---|
| 0 | 10 |
| 1 | 5 |

In an example, the PSFCH RB includes a PSFCH PRB.

Example three

In some examples of the present application, some variables are used, and the meaning of different variables is explained here.

In an example, one PSFCH-dedicated interlace indicates that the interlace at least includes RBs of a PSFCH used for sending HARQ-ACK and/or at least includes RBs of a PSFCH used for sending the conflict indication. Another type of interlace opposite to the PSFCH-dedicated interlace is the common interlace. The common interlace includes neither RBs of the PSFCH used for sending HARQ-ACK nor RBs of the PSFCH used for sending the conflict indication. Certain signals or channels for channel occupancy may be sent in the common interlace.

In an example, a resource pool includes multiple slots in the time domain and multiple frequency-domain resource elements in the frequency domain. The time-frequency resources in a resource pool are used for sidelink communication.

In an example, the PSFCH may also be referred to as a dedicated PSFCH.

In an example, $K1$ represents the number of RBs of one dedicated PSFCH.

In an example, $K2$ represents the number of RBs which are included in one common interlace and used for sending signals/channels for channel occupancy.

In an example, $M_{\text{subch, slot}}^{\text{PSFCH}}$ represents the number of dedicated PSFCH resources corresponding to or allocated to a sub-channel in a slot, and one dedicated PSFCH resource includes $K1$ RBs.

In an example, $M_{\text{PRB, set}}^{\text{PSFCH}}$ represents the number of frequency-domain RBs of a dedicated PSFCH included within one frequency domain range. In a particular case, $M_{\text{PRB, set}}^{\text{PSFCH}}$ represents the number of frequency-domain RBs of a dedicated PSFCH included in a frequency band of one resource pool. In a particular case, $M_{\text{PRB, set}}^{\text{PSFCH}}$ represents the number of frequency-domain RBs of a dedicated PSFCH included in multiple RB sets in a frequency band of one resource pool. In a particular case, $M_{\text{PRB, set}}^{\text{PSFCH}}$ represents the number of frequency-domain RBs of a dedicated PSFCH included in one RB set in a frequency band of one resource pool.

In an example, $M_{\text{DPRB, interlace}}^{\text{PSFCH}}$ represents the number of dedicated PSFCH RBs included within one interlace within one frequency domain range. In a particular case, $M_{\text{DPRB, interlace}}^{\text{PSFCH}}$ represents the number of frequency-domain RBs of a dedicated PSFCH included within one interlace in a frequency band of one resource pool. In a particular case, $M_{\text{DPRB, interlace}}^{\text{PSFCH}}$ represents the number of frequency-domain RBs of a dedicated PSFCH included in multiple RB sets in a frequency band of one resource pool. In a particular case, $M_{\text{DPRB, interlace}}^{\text{PSFCH}}$ represents the number of frequency-domain RBs of a dedicated PSFCH included within one interlace in one RB set.

In an example, $M_{\text{PRB, interlace}}^{\text{PSFCH}}$ represents the number of RBs included in one interlace within one frequency domain range. In a particular case, $M_{\text{PRB, interlace}}^{\text{PSFCH}}$ represents the number of RBs included within one interlace in a frequency band of one resource pool. In a particular case, $M_{\text{PRB, interlace}}^{\text{PSFCH}}$ represents the number of RBs included in multiple RB sets in a frequency band of one resource pool. In a particular case, $M_{\text{PRB, interlace}}^{\text{PSFCH}}$ represents the number of RBs included within one interlace in one RB set.

In an example, $M_{\text{interlace}}^{\text{PSFCH}}$ represents the number of dedicated PSFCHs included in one interlace within one frequency domain range. In a particular case, $M_{\text{interlace}}^{\text{PSFCH}}$ represents the number of dedicated PSFCHs included within one interlace in a frequency band of one resource pool. In a particular case, $M_{\text{interlace}}^{\text{PSFCH}}$ represents the number of dedicated PSFCHs included in multiple RB sets in a frequency band of one resource pool. In a particular case, $M_{\text{interlace}}^{\text{PSFCH}}$ represents the number of dedicated PSFCHs included within one interlace in an RB set.

In an example, $M_{\text{DPRB, RBset}}^{\text{PSFCH}}$ represents the number of dedicated PSFCH RBs included within one frequency domain range.

In an example, $M_{\text{PRB, RBset}}^{\text{PSFCH}}$ represents the number of RBs included within one frequency domain range.

In an example, $N_{\text{PSSCH}}^{\text{PSFCH}}$ represents the period of a PSFCH resource.

Example four

In an example, the number of RBs allocated to one sub-channel $i$ and one slot $i$ is an integer multiple of $K1$, as shown in S1 and S2.

In S1, $M_{\text{PRB, set}}^{\text{PSFCH}}$ RBs are ordered in a manner of intra-interlace ordering followed by inter-interlace ordering. The ordered set obtained after the ordering operation includes $\overline{M_{\text{PRB, set}}^{\text{PSFCH}}}$ RBs. $M_{\text{PRB, set}}^{\text{PSFCH}}$ is equal to $\overline{M_{\text{PRB, set}}^{\text{PSFCH}}}$.

In S2, $\left[ (k) \cdot \left( \text{M}_{\text{subch, slot}}^{\text{PSFCH}} * K1 \right), (k+1) \cdot \left( \text{M}_{\text{subch, slot}}^{\text{PSFCH}} * K1 \right) - 1 \right]$ -th RBs are allocated from $\overline{M_{\text{PRB, set}}^{\text{PSFCH}}}$ ordered RBs to (slot $i$, sub-channel $j$).

In an example, $k = i + j \cdot N_{\text{PSSCH}}^{\text{PSFCH}}$, where $N_{\text{PSSCH}}^{\text{PSFCH}}$ is equal to the period of the PSFCH, in slots.

In a particular case, the sub-channel j is one sub-channel within one RB set.

In an example, the $\left[ (k) \cdot \text{M}_{\text{subch, slot}}^{\text{PSFCH}}, (k+1) \cdot \text{M}_{\text{subch, slot}}^{\text{PSFCH}} - 1 \right]$ -th RBs allocated to (slot $i$, sub-channel $j$) corresponds to a $k$-th PSFCH.

In an example, the operation of ordering $M_{\text{PRB, set}}^{\text{PSFCH}}$ RBs in a manner of intra-interlace ordering followed by inter-interlace ordering includes at least one of the following cases.

During the intra-interlace ordering, RBs to be ordered include dedicated PSFCH RBs; during the inter-interlace ordering, the interlaces to be ordered are interlaces including the PSFCH RBs.

In an example, the operation of ordering $M_{\text{PRB, set}}^{\text{PSFCH}}$ RBs in a manner of intra-interlace ordering followed by inter-interlace ordering includes at least one of the following operations.

Within one interlace, the RBs are ordered in ascending order; or within one interlace, the RBs are ordered in descending order.

In an example, the operation of ordering $M_{\text{PRB, set}}^{\text{PSFCH}}$ RBs in a manner of intra-interlace ordering followed by inter-interlace ordering includes at least one of the following operations.

The RBs are ordered in ascending order of interlace numbers; or the RBs are ordered in descending order of interlace numbers.

In an example, the operation of ordering $M_{\text{PRB, set}}^{\text{PSFCH}}$ RBs in a manner of intra-interlace ordering followed by inter-interlace ordering includes at least one of the following operations.

During the inter-interlace ordering, all interlaces are ordered; or the inter-interlace ordering, only PSFCH-dedicated interlaces are ordered.

In an example, the operation of ordering $M_{\text{PRB, set}}^{\text{PSFCH}}$ RBs includes performing the following operation once or repeatedly performing the following operation multiple times: sequentially selecting/ordering $K1$ RBs within the interlace in ascending order of interlace indices.

FIG. 4 is a schematic diagram of the ordering of RBs with intra-interlace ordering followed by inter-interlace ordering according to an embodiment of the present application. As shown in FIG. 4, one frequency domain range includes $M_{\text{PRB, set}}^{\text{PSFCH}} = 18$ dedicated PSFCH RBs, and these 18 dedicated PSFCH RBs are distributed over three interlaces within the frequency domain range. The ordered RBs include $\overline{M_{\text{PRB, set}}^{\text{PSFCH}}}$ RBs. In the figure, the dedicated PSFCH RBs are labeled with numerical indices, and these numerical indices represent the numbers of the RBs in the ordered RB set. For example, the number 11 in the figure represents the sixth RB within the interlace 0, which corresponds to the eleventh RB in the ordered RB set consisting of $\overline{M_{\text{PRB, set}}^{\text{PSFCH}}} = 18$ RBs (ordered from the RB 0). In FIG. 4, $K1 = 3$.

In an example, one PSFCH-dedicated interlace indicates that the interlace at least includes RBs of a PSFCH used for sending HARQ-ACK and/or at least includes RBs of a PSFCH used for sending the conflict indication. Another type of interlace opposite to the PSFCH-dedicated interlace is the common interlace. The common interlace includes neither RBs of the PSFCH used for sending HARQ-ACK nor RBs of the PSFCH used for sending the conflict indication. Certain signals or channels for channel occupancy may be sent in the common interlace.

FIG. 5 is a schematic diagram of the configuration of PSFCH RB mapping and a PSFCH numbering rule according to an embodiment of the present application. As shown in FIG. 5, the interlace 0 to the interlace 4 may span at least one RB set, where the RB set 0 among the at least one RB set includes 53 RBs numbered 0 to 52. The RBs of the interlace 0 to the interlace 4 within the range of the RB set 0 are as follows:

The interlace 0 includes $M_{\text{PRB, interlace}}^{\text{PSFCH}} = 11$ RBs with indices {0, 5, 10, 15, 20, 25, 30, 35, 40, 45, 50}, the interlace 1 includes $M_{\text{PRB, interlace}}^{\text{PSFCH}} = 11$ RBs with indices {1, 6, 11, 16, 21, 26, 31, 36, 41, 46, 51}, the interlace 2 includes $M_{\text{PRB, interlace}}^{\text{PSFCH}} = 11$ RBs with indices {2, 7, 12, 17, 22, 27, 32, 37, 42, 47, 52}, the interlace 3 includes $M_{\text{PRB, interlace}}^{\text{PSFCH}} = 10$ RBs with indices {3, 8, 13, 18, 23, 28, 33, 38, 43, 48}, and the interlace 4 includes $M_{\text{PRB, interlace}}^{\text{PSFCH}} = 10$ RBs with indices {4, 9, 14, 19, 24, 29, 34, 39, 44, 49}.

In this example, each interlace among the interlace 0 to the interlace 4 within the range of the RB set 0 includes $M_{\text{DPRB, interlace}}^{\text{PSFCH}} = 9$ RBs configured as dedicated PSFCH RBs. The interlace 0 includes $M_{\text{DPRB, interlace}}^{\text{PSFCH}} = 9$ RBs configured for the PSFCH: {0, 5, 10, 15, 20, 25, 30, 35, 40}; the interlace 1 includes $M_{\text{DPRB, interlace}}^{\text{PSFCH}} = 9$ RBs configured for the PSFCH: {1, 6, 11, 16, 21, 26, 31, 36, 41}; the interlace 2 includes $M_{\text{DPRB, interlace}}^{\text{PSFCH}} = 9$ RBs configured for the PSFCH: {2, 7, 12, 17, 22, 27, 32, 37, 42}; the interlace 3 includes $M_{\text{DPRB, interlace}}^{\text{PSFCH}} = 9$ RBs configured for the PSFCH: {3, 8, 13, 18, 23, 28, 33, 38, 43}; and the interlace 4 includes $M_{\text{DPRB, interlace}}^{\text{PSFCH}} = 9$ RBs configured for the PSFCH: {4, 9, 14, 19, 24, 29, 34, 39, 44}.

The above interlaces 0 to 4 include a total of $M_{\text{DPRB, RBset}}^{\text{PSFCH}} = 45$ dedicated PSFCH RBs in the RB set 0.

The above $\overline{M_{\text{DPRB, RBset}}^{\text{PSFCH}}} = 45$ RBs configured for the PSFCH are sequentially ordered in a manner of inter-interlace ordering followed by intra-interlace ordering.

In this manner, the sequence of the RBs configured for the PSFCH in the reordered RB set 0 is {0, 5, 10, 15, 20, 25, 30, 35, 40, 1, 6, 11, 16, 21, 26, 31, 36, 41, 2, 7, 12, 17, 22, 27, 32, 37, 42, 3, 8, 13, 18, 23, 28, 33, 38, 43, 4, 9, 14, 19, 24, 29, 34, 39, 44}. The ordered RB set includes $\overline{M_{\text{DPRB, RBset}}^{\text{PSFCH}}}$ 45 RBs. $\overline{M_{\text{DPRB, RBset}}^{\text{PSFCH}}}$ is equal to $M_{\text{DPRB, RBset}}^{\text{PSFCH}}$. $\left[ (k) \cdot \left( M_{\text{subch, slot}}^{\text{PSFCH}} * K1 \right), (k+1) \cdot \left( M_{\text{subch, slot}}^{\text{PSFCH}} * K1 \right) - 1 \right]$ -th RBs are allocated from the $\overline{M_{\text{DPRB, RBset}}^{\text{PSFCH}}}$ ordered RBs to (slot $i$, sub-channel $j$), where $k = i + j \cdot N_{\text{PSSCH}}^{\text{PSFCH}}$. $\left[ (k) \cdot \left( M_{\text{subch, slot}}^{\text{PSFCH}} * K1 \right), (k+1) \cdot \left( M_{\text{subch, slot}}^{\text{PSFCH}} * K1 \right) - 1 \right]$ is the position index for the above set of the ordered RBs {0, 5, 10, 15, 20, 25, 30, 35, 40, 1, 6, 11, 16, 21, 26, 31, 36, 41, 2, 7, 12, 17, 22, 27, 32, 37, 42, 3, 8, 13, 18, 23, 28, 33, 38, 43, 4, 9, 14, 19, 24, 29, 34, 39, 44} configured for the PSFCH. In a particular case, when the

value range of $[(k) \cdot \left( M_{\text{subch, slot}}^{\text{PSFCH}} * K1 \right), (k+1) \cdot \left( M_{\text{subch, slot}}^{\text{PSFCH}} * K1 \right) - 1]$ is [3, 5], the corresponding RBs among the $\overline{M_{\text{PRB, set}}^{\text{PSFCH}}}$ ordered RBs are the third to fifth RBs, and the corresponding global RB numbers are {15, 20, 25}.

Example five

In an example, the operation of numbering the PSFCH resource according to the preset rule includes at least one of the following operations.

PSFCH resources are first numbered sequentially within one interlace, then numbered sequentially in the next interlace, and so forth; or PSFCH resources are numbered sequentially across interlaces, where adjacent-numbered PSFCH resources are located in different interlaces.

In an example, the PSFCH resources are first numbered sequentially within one interlace and then numbered sequentially within the next interlace in an interlace set. As shown in FIG. 5, 15 PSFCH resources are to be ordered, and the PSFCH numbering is first performed within the first interlace and then performed within the next adjacent interlace in the interlace set {0, 1, 2, 3, 4}, and so forth. In FIG. 5, the PSFCH numbers are sequentially {0, 1, 2, ..., 14}.

In an example, the PSFCH resources include candidate PSFCH resources or include dedicated PSFCH resources. One candidate PSFCH resource may not be configured/pre-configured as a dedicated PSFCH resource. One dedicated PSFCH resource may be configured or pre-configured as a PSFCH resource of the dedicated PSFCH.

In an example, the PSFCH resources include only dedicated PSFCH resources.

In an example, the PSFCH resources may also be referred to as PSFCHs, and/or the dedicated PSFCH resources may also be referred to as dedicated PSFCHs, and/or the candidate PSFCH resources may also be referred to as candidate PSFCHs.

In an example, the operation where the PSFCH resources are first numbered sequentially within one interlace, then numbered sequentially in the next interlace and so forth includes at least one of the following operations.

The PSFCH resources are ordered in ascending order of interlace numbers; or the PSFCH resources are ordered in descending order of interlace numbers.

In an example, the operation where the PSFCH resources are first numbered sequentially within one interlace, then numbered sequentially in the next interlace and so forth includes at least one of the following operations.

The PSFCH resources are numbered across all interlaces included in a frequency domain range; or the PSFCH resources are numbered within PSFCH-dedicated interlaces included in a frequency domain range.

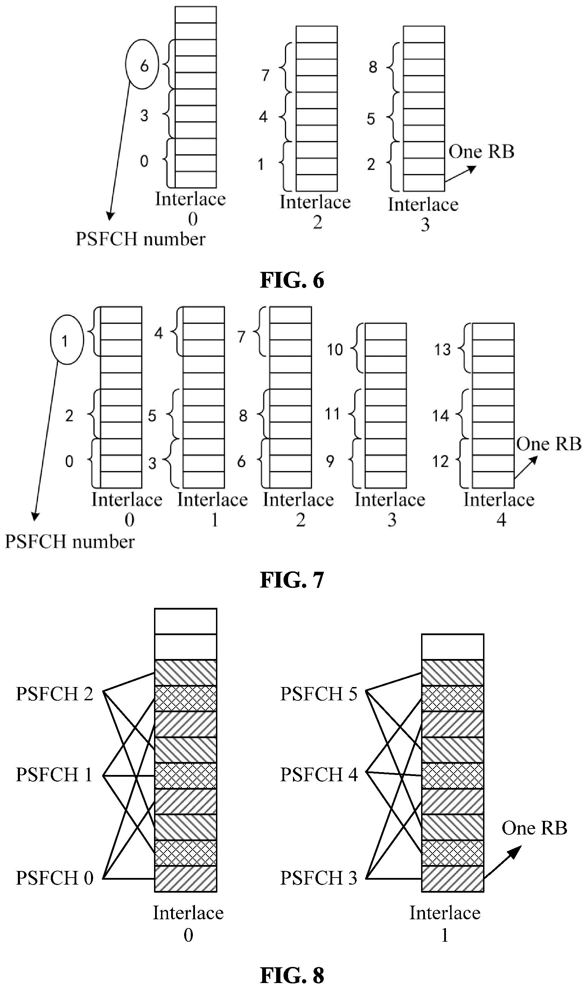

In an example, FIG. 6 is a schematic diagram of the numbering of PSFCHs in ascending order of interlace indices according to an embodiment of the present application. As shown in FIG. 6, PSFCH numbering is performed at least once, and PSFCH numbering is performed in ascending order of interlace indices each time.

In an example, one frequency domain range includes at least one of: multiple RB sets within one resource pool; all RB sets within one resource pool; multiple RB sets within one BWP; all RB sets within one BWP; or one RB set.

In an example, the PSFCH numbers and the PSFCH RBs have a mapping relationship.

In an example, for the interlace $m$, $M_{\text{PRB, interlace}}^{\text{PSFCH}}$ RBs are included within one frequency domain range. The interlace $m$ includes $M_{\text{interlace}}^{\text{PSFCH}} = floor(M_{\text{PRB,interlace}}^{\text{PSFCH}}/K1)$ PSFCH resources or $M_{\text{interlace}}^{\text{PSFCH}} = floor(10/K1)$ PSFCH resources.

In an example, the first $floor(M_{\text{PRB,RBset}}^{\text{PSFCH}}/K1) * K1$ RBs within the interlace $m$ are available RBs of the PSFCH resources.

In an example, the $\overline{mm}$-th PSFCH resource within the interlace $m$ corresponds to the $[\overline{mm} * K1, (\overline{mm} + 1) * K1 - 1]$-th RBs within the interlace $m$.

In an example, FIG. 7 is a schematic diagram of the mapping relationship between PSFCH resource numbers and RBs according to an embodiment of the present application. As shown in FIG. 7, the $\overline{mm}$-th PSFCH resource (with the PSFCH resources numbered from 0) within the interlace $m$ includes at least one of the following cases.

For an even $\overline{mm}$, the $\overline{mm}$-th PSFCH resource corresponds to $\{I_E \times K1, I_E \times K1 + 1, I_E \times K1 + 2, ..., (I_E + 1) \times K1 - 1\}$-th RBs within the interlace $m$, or the $\overline{mm}$-th PSFCH resource corresponds to $\{I_E \times K1 + 1, I_E \times K1 + 2, I_E \times K1 + 3, ..., (I_E + 1) \times K1\}$-th RBs within the interlace m, where $I_E = \overline{mm}/2$. The global numbers of the PSFCH resources shown in FIG. 7 are 0 to 14, where $\overline{mm}$ corresponding to the PSFCH resources having global numbers of 12, 13, and 14 within the interlace 4 are 0, 1, and 2, respectively.

In an example, FIG. 8 is a schematic diagram of the mapping relationship between PSFCH resource numbers and RBs according to an embodiment of the present application. As shown in FIG. 8, the $\overline{mm}$-th PSFCH resource (with the PSFCH resources numbered from 0) within the interlace $m$ includes the following case.

The $\overline{mm}$ -th PSFCH resource corresponds to

$$\left\{\overline{mm}, M_{\text{interlace}}^{\text{PSFCH}} + \overline{mm}, 2M_{\text{interlace}}^{\text{PSFCH}} + \overline{mm}, 3M_{\text{interlace}}^{\text{PSFCH}} + \overline{mm}, ..., (K1-1) \cdot M_{\text{interlace}}^{\text{PSFCH}} + \overline{mm}\right\}$$ -th RBs, where $\overline{mm} \in \left\{0, 1, ..., M_{\text{interlace}}^{\text{PSFCH}} - 1\right\}$, and $K1$ is a positive integer.

Example six

In an example, (one slot, one sub-channel) and one PSFCH number have a mapping relationship.

In an example, one sub-channel is one sub-channel in one RB set.

In an example, the $\left[k \cdot M_{\text{subch, slot}}^{\text{PSFCH}}, (k+1) \cdot M_{\text{subch, slot}}^{\text{PSFCH}} - 1\right]$-th PSFCH resources are allocated to (slot $i$, sub-channel j), where $k$ may be 0. Each PSFCH resource includes $K1$ RBs, and the $K1$ RBs included in one PSFCH resource are RBs belonging to the same interlace.

Example seven

In an example, the PSFCH numbers and the interlace numbers have a mapping relationship and/or the PSFCH numbers and the PSFCH RB positions/indices within the interlace have a mapping relationship.

In an example, the PSFCH numbers and the interlace numbers have a mapping relationship, and the interlaces include all interlaces of one PSFCH occasion or the interlaces include all PSFCH-dedicated interlaces within one PSFCH occasion.

In an example, the PSFCH numbers and the interlace numbers having a mapping relationship includes the following case: the PSFCH numbered $mm$ and the interlace numbered $(m = floor(mm/M_{\text{interlace}}^{\text{PSFCH}})$ have a mapping relationship, that is, the number of the interlace to which the PSFCH numbered $mm$ is mapped is $floor(mm/M_{\text{interlace}}^{\text{PSFCH}})$, where $M_{\text{interlace}}^{\text{PSFCH}}$ is the number of dedicated PSFCHs included within one interlace.

In an example, the PSFCH RB to which the PSFCH numbered $mm$ is mapped is located within the interlace $m$, and the mapped PSFCH RB includes [$\overline{mm}$ * $K1$, ($\overline{mm}$ + 1) * $K1$ - 1]-th dedicated PSFCH RBs within the interlace m, where $\overline{mm} = mod(mm, M_{\text{interlace}}^{\text{PSFCH}})$.

In an example, the PSFCH RB to which the PSFCH numbered $mm$ is mapped is located within the interlace $m$, and for an even $\overline{mm} = mod(mm, M_{\text{interlace}}^{\text{PSFCH}})$, the mapped PSFCH RB includes {$I_E \times K1$, $I_E \times K1 + 1$, $I_E \times K1 + 2$, ..., ($I_E$ + 1) $\times$ $K1$ - 1}-th dedicated PSFCH RBs within the interlace $m$, where $I_E = \overline{mm}/2$.

In an example, the PSFCH RB to which the PSFCH numbered $mm$ is mapped is located within the interlace m, and the mapped PSFCH RB includes

$$\left\{\overline{mm}, M_{\text{interlace}}^{\text{PSFCH}} + \overline{mm}, 2M_{\text{interlace}}^{\text{PSFCH}} + \overline{mm}, ..., (K1-1) \cdot M_{\text{interlace}}^{\text{PSFCH}} + \overline{mm}\right\}$$ -th dedicated PSFCH RBs within the interlace $m$, where $\overline{mm} \in \left\{0, 1, ..., M_{\text{interlace}}^{\text{PSFCH}} - 1\right\}$.

Example eight

In an example, each interlace including dedicated PSFCH RBs within one RB set includes the same number of PSFCH RBs and/or includes the same number of RBs corresponding to the PSFCH.

In an example, each dedicated PSFCH includes $K1$ RBs, and the $K1$ RBs are RBs belonging to the same interlace within one frequency domain range. The number of PSFCH RBs allocated to (slot $i$, sub-channel $j$) is an integer multiple of $K1$. The sub-channel j is one sub-channel in one RB set.

In an example, one interlace within the range of one RB set includes $M_{\text{DPRB, RBset}}^{\text{PSFCH}}$ dedicated PSFCH RBs, one dedicated PSFCH includes $K1$ RB within the interlace, and $M_{\text{DPRB, RBset}}^{\text{PSFCH}}$ is an integer multiple of $K1$.

Example nine

In an example, one channel is defined as a frequency-domain resource with a bandwidth of 20 MHz and belongs to the unlicensed spectrum. In the unlicensed spectrum, one communication node performs the channel access procedure on one or more channels, and only when the one or more channels are evaluated as available can the communication node send information on this channel or these channels.

In an example, one channel may include a certain number of RBs available for information transmission, and these RBs are called an RB set. In addition to the RB set, one channel may further include other RBs used for the guard band.

In an example, the dedicated PSFCH resources are configured or pre-configured via a higher-layer signaling, and the number of the configured dedicated PSFCH resources is an integer multiple of $N_{\mathrm{PSSCH}}^{\mathrm{PSFCH}} * M_{\mathrm{subch,\ slot}}^{\mathrm{PSFCH}}$ .

In an example, the dedicated PSFCH RBs are configured or pre-configured via a higher-layer signaling, and the number of the configured dedicated PSFCH RBs is an integer multiple of $N_{\mathrm{PSSCH}}^{\mathrm{PSFCH}} * M_{\mathrm{subch,\ slot}}^{\mathrm{PSFCH}} * K1$ .

In an example, the operation of configuring PSFCH resources includes the following operations.

Interlaces including dedicated PSFCH RBs are configured or pre-configured via the higher-layer signaling; and dedicated PSFCH RBs within the interlaces are configured or pre-configured via a higher-layer signaling.

In a particular case, the interlaces including the dedicated PSFCH RBs are configured or pre-configured via the bitmap included in the higher-layer signaling.

In a particular case, the dedicated PSFCH RBs within the interlaces are configured or pre-configured via the bitmap included in the higher-layer signaling.

In an example, one resource pool includes multiple RB sets, and the dedicated PSFCH RBs within the interlaces are configured or pre-configured via the bitmap included in the higher-layer signaling.

In an example, each interlace among the multiple interlaces spans multiple RB sets. (One RB set *r,* one interlace *m*) includes a certain number of RBs. The length of the bitmap used for configuring dedicated PSFCH RBs is equal to the maximum number of RBs included in any pair of (one RB set *r,* one interlace *m*) within one resource pool. In an example, if the length of the bitmap is greater than the number x of RBs included in (one RB set *r,* one interlace *m*), only the first x bits in the bitmap are used for configuring the dedicated PSFCH RBs.

In an example, the higher-layer signaling includes one of media access control (MAC) information or radio resource control (RRC) information.

In an example, the pre-configuration information is typically higher-layer pre-configuration information, where the higher layer is relative to the physical layer. The configuration generally comes from a network or a base station and is sent from the network or the base station to a UE via a signaling. The pre-configuration is generally provided for other higher-layer entities, such as the UE's own higher layer, other network entities, and the like.

Example ten

In an example, the PSFCH resources are indicated through a bitmap. The length of the bitmap is equal to the number of candidate PSFCH resources within one resource pool; or, the length of the bitmap is equal to the number of candidate PSFCH resources in one RB set. An $\bar{i}$-th bit in the bitmap is used for indicating $\bar{i}$-th candidate PSFCH resource. When the $\bar{i}$-th bit of the bitmap is 1, the $\bar{i}$-th bit indicates that the $\bar{i}$-th candidate PSFCH resource is a configured available PSFCH resource.

In a particular case, the bitmap includes 15 bits. When the bitmap is configured as {0, 1, 1, 1, 0, 1, 1, 1, 0, 0, 0, 1, 1, 1, 0}, the actually configured PSFCH resources among the candidate PSFCH resources numbered 0 to 14 include {1, 2, 3, 5, 6, 7, 11, 12, 13}.

In an example, the start position of the bitmap corresponds to the first RB of the interlaces in one RB set.

In an example, the length of the bitmap used for configuring the dedicated PSFCH RBs is equal to 10.

In an example, the bitmap with a length equal to 10 is used for configuring all interlaces in all RB sets. That is, for any interlace in any RB set, the bitmap with a length equal to 10 is used for configuring which RBs within the interlace of the RB set are configured as dedicated PSFCH RBs.

In an example, the bitmap with a length equal to 10 is used for configuring PSFCH-dedicated interlaces in all RB sets. That is, for any PSFCH-dedicated interlace in any RB set, the bitmap with a length equal to 10 is used for configuring which RBs within the interlace of the RB set are configured as dedicated PSFCH RBs.

In an example, the bit of 1 in the bitmap is used for configuring the dedicated PSFCH RBs.

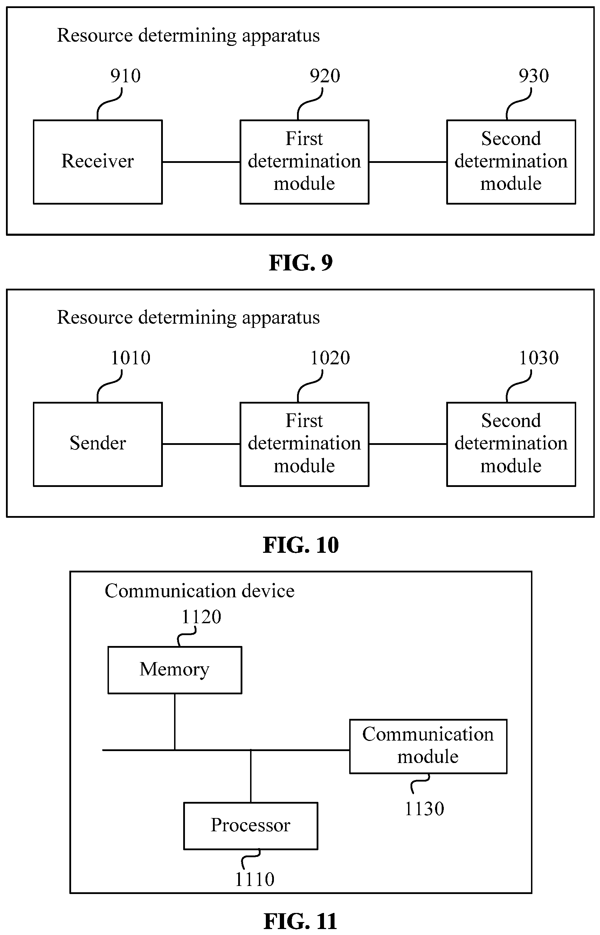

In an embodiment, FIG. 9 is a block diagram of a resource determining apparatus according to an embodiment of the present application. This embodiment is applied to a first communication device. As shown in FIG. 9, the resource determining apparatus in this embodiment includes a receiver 910, a first determination module 920 and a second determination module 930.

The receiver 910 is configured to receive a PSSCH in a resource pool. The first determination module 920 is configured to determine a mapping relationship between a sub-channel and a PSFCH resource. The second determination module 930 is configured to determine a PSFCH resource associated with at least one sub-channel included in the received PSSCH based on the mapping relationship between the sub-channel and the PSFCH resource, where one PSFCH resource includes at least one RB within one interlace.

In an embodiment, one interlace includes one set of RBs distributed at an equal RB interval within one frequency domain range, where the one frequency domain range includes at least one of: multiple RB sets within a frequency domain range corresponding to one resource pool; all RB sets within a frequency domain range corresponding to one resource pool; multiple RB sets within one BWP; all RB sets within one BWP; or one RB set.

In an embodiment, an $\overline{mm}$-th PSFCH resource within one interlace includes at least one RB within one interlace, which includes the following case.

The mm-th PSFCH resource within the one interlace includes [$\overline{mm}$ * K1, ($\overline{mm}$ + 1)* K1 - 1]-th RBs within the one interlace, where $K$1 represents the number of RBs included in one PSFCH resource.

In an embodiment, the $\overline{mm}$-th PSFCH resource within one interlace includes at least one RB within one interlace, which includes the following case.

For an even *mm,* the $\overline{mm}$-th PSFCH resource corresponds to $\{I_E \times K1, I_E \times K1 + 1, I_E \times K1 + 2, ..., (I_E + 1) \times K1 - 1\}$-th RBs within an interlace *m,* where $I_E = \overline{mm}/2$, and K1 represents the number of RBs included in one PSFCH resource.

In an embodiment, the $\overline{mm}$-th PSFCH resource within one interlace includes at least one RB within one interlace, which includes the following case.

The $\overline{mm}$ -th PSFCH resource within one interlace includes

$$\left\{\overline{mm}, M_{\text{interlace}}^{\text{PSFCH}} + \overline{mm}, 2M_{\text{interlace}}^{\text{PSFCH}} + \overline{mm}, 3M_{\text{interlace}}^{\text{PSFCH}} + \overline{mm}, ..., (K1 - 1) \cdot M_{\text{interlace}}^{\text{PSFCH}} + \overline{mm}\right\}$$ -th RBs within one interlace, where $\overline{mm} \in \{0,1,...,M_{\text{interlace}}^{\text{PSFCH}} - 1\}$, $K$1 is a positive integer and represents the number of RBs included in one PSFCH resource, and $M_{\text{interlace}}^{\text{PSFCH}}$ is a positive integer and represents the number of PSFCH resources included within one interlace.

In an embodiment, the operation of determining the mapping relationship between the sub-channel and the PSFCH resource includes the operation of allocating a PSFCH resource to one sub-channel in one slot, which includes the following operation. $\left[k \cdot M_{\text{subch, slot}}^{\text{PSFCH}}, (k + 1) \cdot M_{\text{subch, slot}}^{\text{PSFCH}} - 1\right]$ -th PSFCH resources are allocated from one set of PSFCH resources to a sub-channel *j* in a slot *i,* or PSFCH resources numbered $\left[k \cdot M_{\text{subch, slot}}^{\text{PSFCH}}, (k + 1) \cdot M_{\text{subch, slot}}^{\text{PSFCH}} - 1\right]$ are allocated from one set of PSFCH resources to the sub-channel *j* in the slot *i,* where $k = i + j \cdot N_{\text{PSSCH}}^{\text{PSFCH}}$, $N_{\text{PSSCH}}^{\text{PSFCH}}$ is equal to a period of a PSFCH, and $M_{\text{subch, slot}}^{\text{PSFCH}}$ is a positive integer.

In an embodiment, the operation of determining the mapping relationship between the sub-channel and the PSFCH resource includes the operation of allocating at least one PSFCH RB to one sub-channel in one slot, which includes the following operation. $\left[(k) \cdot \left(M_{\text{subch, slot}}^{\text{PSFCH}} * K1\right), (k + 1) \cdot \left(M_{\text{subch, slot}}^{\text{PSFCH}} * K1\right) - 1\right]$ -th PSFCH RBs are allocated from one set of PSFCH RBs to the sub-channel *j* in the slot *i,* or PSFCH RBs numbered $\left[(k) \cdot \left(M_{\text{subch, slot}}^{\text{PSFCH}} * K1\right), (k + 1) \cdot \left(M_{\text{subch, slot}}^{\text{PSFCH}} * K1\right) - 1\right]$ are allocated from one set of PSFCH RBs to the sub-channel *j* in the slot *i,* where $k = i + j \cdot N_{\text{PSSCH}}^{\text{PSFCH}}$, $N_{\text{PSSCH}}^{\text{PSFCH}}$ is equal to a period of a PSFCH, $M_{\text{subch, slot}}^{\text{PSFCH}}$ is a positive integer, and one PSFCH resource includes $K$1 PSFCH RBs.

In an embodiment, the one set of PSFCH RBs is one set of ordered PSFCH RBs.

In an embodiment, before the mapping relationship between the sub-channel and the PSFCH resource is determined, the resource determining apparatus applied to the first communication device further includes an ordering module.

The ordering module is configured to order one set of PSFCH RBs according to a preset rule.

In this embodiment, the operation of ordering one set of PSFCH RBs according to the preset rule includes at least one of the following operations.

All PSFCH RBs within each interlace in one interlace set are sequentially ordered according to an interleaving order; or $K$1 PSFCH RBs within each interlace in one interlace set are sequentially ordered in ascending order of interlace indices, and the ordering operation is performed once or the ordering operation is repeated multiple times.

In an embodiment, the operation of determining the mapping relationship between the sub-channel and the number of the PSFCH resource includes the operation of numbering the PSFCH resource according to a preset rule, which includes at least one of the following operations.

All PSFCH resources within each interlace in one interlace set are sequentially numbered according to an interleaving order; or one PSFCH resource within each interlace in one interlace set is sequentially numbered in ascending order of interlace indices, and the numbering operation is performed once or the numbering operation is repeated multiple times.

In an embodiment, one PSFCH resource including at least one RB within one interlace and the number of the one PSFCH resource and the number of the interlace having a mapping relationship include the following case.

A PSFCH resource numbered $mm$ among one set of PSFCH resources includes at least one RB within an interlace $m$, where the relationship between $mm$ and $m$ includes $m = floor(mm/M_{\text{interlace}}^{\text{PSFCH}})$, $M_{\text{interlace}}^{\text{PSFCH}}$ represents the number of PSFCHs included within the one interlace, and $floor(\cdot)$ represents rounding down.

In an embodiment, the one PSFCH resource including the at least one RB within the one interlace includes the following case.

A PSFCH resource numbered $mm$ among one set of PSFCH resources includes an $\overline{mm}$-th PSFCH resource within the one interlace, where the relationship between $mm$ and $\overline{mm}$ includes

$$\overline{mm} = mod(mm, M_{\text{interlace}}^{\text{PSFCH}}),\ M_{\text{interlace}}^{\text{PSFCH}}$$ represents the number of PSFCH resources included within the one interlace, and $mod(mm, M_{\text{interlace}}^{\text{PSFCH}})$ represents a remainder when $mm$ which is an integer is divided by $M_{\text{interlace}}^{\text{PSFCH}}$ which is an integer.

The resource determining apparatus provided by this embodiment is configured to perform the resource determining method applied to the first communication device described in the embodiment shown in FIG. 1. The implementation principles and technical effects of the resource determining apparatus provided by this embodiment are similar to those of the resource determining method applied to the first communication device described in the embodiment shown in FIG. 1 and thus are not repeated here.

In an embodiment, FIG. 10 is a block diagram of another resource determining apparatus according to an embodiment of the present application. This embodiment is applied to a second communication device. As shown in FIG. 10, the resource determining apparatus in this embodiment includes a sender 1010, a first determination module 1020 and a second determination module 1030.

The sender 1010 is configured to send a PSSCH in a resource pool.

The first determination module 1020 is configured to determine a mapping relationship between a sub-channel and a PSFCH resource.

The second determination module 1030 is configured to determine a PSFCH resource associated with at least one sub-channel included in the sent PSSCH based on the mapping relationship between the sub-channel and the PSFCH resource, where one PSFCH resource includes at least one RB within one interlace.

In an embodiment, one interlace includes one set of RBs distributed at an equal RB interval within one frequency domain range, where the one frequency domain range includes at least one of: multiple RB sets within a frequency domain range corresponding to one resource pool; all RB sets within a frequency domain range corresponding to one resource pool; multiple RB sets within one BWP; all RB sets within one BWP; or one RB set.

In an embodiment, an $\overline{mm}$-th PSFCH resource within one interlace includes at least one RB within one interlace, which includes the following case.

The $\overline{mm}$-th PSFCH resource within the one interlace includes $[\overline{mm} * K1, (\overline{mm} + 1) * K1 - 1]$-th RBs within the one interlace, where $K$1 represents the number of RBs included in one PSFCH resource.

In an embodiment, the $\overline{mm}$-th PSFCH resource within one interlace includes at least one RB within one interlace, which includes the following case.

For an even $mm$, the $\overline{mm}$-th PSFCH resource corresponds to $\{I_E \times K1, I_E \times K1 + 1, I_E \times K1 + 2, ..., (I_E + 1) \times K1 - 1\}$-th RBs within an interlace $m$, where $I_E = \overline{mm}/2$, and K1 represents the number of RBs included in one PSFCH resource.

In an embodiment, the $\overline{mm}$-th PSFCH resource within one interlace includes at least one RB within one interlace, which includes the following case.

The $\overline{mm}$-th PSFCH resource within one interlace includes

$$\left\{ \overline{mm}, M_{\text{interlace}}^{\text{PSFCH}} + \overline{mm}, 2M_{\text{interlace}}^{\text{PSFCH}} + \overline{mm}, 3M_{\text{interlace}}^{\text{PSFCH}} + \overline{mm}, ..., (K1 - 1) \cdot M_{\text{interlace}}^{\text{PSFCH}} + \overline{mm} \right\}$$ -th RBs within one interlace, where $\overline{mm} \in \left\{0, 1, \ldots, M_{\text{interlace}}^{\text{PSFCH}} - 1\right\}$, $K1$ is a positive integer and represents the number of RBs included in one PSFCH resource, and $M_{\text{interlace}}^{\text{PSFCH}}$ is a positive integer and represents the number of PSFCH resources included within one interlace.

In an embodiment, the operation of determining the mapping relationship between the sub-channel and the PSFCH resource includes the operation of allocating a PSFCH resource to one sub-channel in one slot, which includes the following operation. $\left[k \cdot M_{\text{subch, slot}}^{\text{PSFCH}}, (k+1) \cdot M_{\text{subch, slot}}^{\text{PSFCH}} - 1\right]$ -th PSFCH resources are allocated from one set of PSFCH resources to a sub-channel $j$ in a slot $i$, or PSFCH resources numbered $\left[k \cdot M_{\text{subch, slot}}^{\text{PSFCH}}, (k+1) \cdot M_{\text{subch, slot}}^{\text{PSFCH}} - 1\right]$ are allocated from one set of PSFCH resources to the sub-channel $j$ in the slot $i$, where $k = i + j \cdot N_{\text{PSSCH}}^{\text{PSFCH}}$, $N_{\text{PSSCH}}^{\text{PSFCH}}$ is equal to a period of a PSFCH, and $M_{\text{subch, slot}}^{\text{PSFCH}}$ is a positive integer.

In an embodiment, the operation of determining the mapping relationship between the sub-channel and the PSFCH resource includes the operation of allocating at least one PSFCH RB to one sub-channel in one slot, which includes the following operation. $\left[(k) \cdot \left(M_{\text{subch, slot}}^{\text{PSFCH}} * K1\right), (k+1) \cdot \left(M_{\text{subch, slot}}^{\text{PSFCH}} * K1\right) - 1\right]$ -th PSFCH RBs are allocated from one set of PSFCH RBs to the sub-channel $j$ in the slot $i$, or PSFCH RBs numbered $\left[(k) \cdot \left(M_{\text{subch, slot}}^{\text{PSFCH}} * K1\right), (k+1) \cdot \left(M_{\text{subch, slot}}^{\text{PSFCH}} * K1\right) - 1\right]$ are allocated from one set of PSFCH RBs to the sub-channel $j$ in the slot $i$, where $k = i + j \cdot N_{\text{PSSCH}}^{\text{PSFCH}}$, $N_{\text{PSSCH}}^{\text{PSFCH}}$ is equal to a period of a PSFCH, $M_{\text{subch, slot}}^{\text{PSFCH}}$ is a positive integer, and one PSFCH resource includes $K1$ PSFCH RBs.

In an embodiment, the one set of PSFCH RBs is one set of ordered PSFCH RBs.

In an embodiment, before the mapping relationship between the sub-channel and the PSFCH resource is determined, the resource determining apparatus applied to the second communication device further includes an ordering module. The ordering module is configured to order one set of PSFCH RBs according to a preset rule.

In an embodiment, the operation of ordering one set of PSFCH RBs according to the preset rule includes at least one of the following operations.

All PSFCH RBs within each interlace in one interlace set are sequentially ordered according to an interleaving order; or $K1$ PSFCH RBs within each interlace in one interlace set are sequentially ordered in ascending order of interlace indices, and the ordering operation is performed once or the ordering operation is repeated multiple times.

In an embodiment, the operation of determining the mapping relationship between the sub-channel and the number of the PSFCH resource includes the operation of numbering the PSFCH resource according to a preset rule, which includes at least one of the following operations: all PSFCH resources within each interlace in one interlace set are sequentially numbered according to an interleaving order; or one PSFCH resource within each interlace in one interlace set is sequentially numbered in ascending order of interlace indices, and the numbering operation is performed once or the numbering operation is repeated multiple times.

In an embodiment, one PSFCH resource including at least one RB within one interlace and the number of the one PSFCH resource and the number of the interlace having a mapping relationship include the following case: a PSFCH resource numbered $mm$ among one set of PSFCH resources includes at least one RB within an interlace $m$, where the relationship between $mm$ and $m$ includes $\overline{mm} = mod(mm, M_{\text{interlace}}^{\text{PSFCH}})$, $M_{\text{interlace}}^{\text{PSFCH}}$ represents the number of PSFCHs included within the one interlace, and $floor(\cdot)$ represents rounding down.

In an embodiment, the one PSFCH resource including the at least one RB within the one interlace includes the following case: a PSFCH resource numbered $mm$ among one set of PSFCH resources includes an $\overline{mm}$-th PSFCH resource within the one interlace, where the relationship between $mm$ and $\overline{mm}$ includes $\overline{mm} = mod(mm, M_{\text{interlace}}^{\text{PSFCH}})$, $M_{\text{interlace}}^{\text{PSFCH}}$ represents the number of PSFCH resources included within the one interlace, and $mod(mm, M_{\text{interlace}}^{\text{PSFCH}})$ represents a remainder when $mm$ which is an integer is divided by $M_{\text{interlace}}^{\text{PSFCH}}$ which is an integer.

In an embodiment, FIG. 11 is a structure diagram of a communication device according to an embodiment of the present application. As shown in FIG. 11, the device provided in the present application includes a processor 1110, a memory 1120, and a communication module 1130. One or more processors 1110 may be provided in the device. One processor 1110 is shown in FIG. 11 as an example. One or more memories 1120 may be provided in the device. One memory 1120 is shown in FIG. 11 as an example. The processor 1110, the memory 1120 and the communication module 1130 in the device may be connected via a bus or in other manners. The connection via a bus is shown in FIG. 11 as an example. In this embodiment, the device may be a first communication device.

As a computer-readable storage medium, the memory 1120 may be configured to store software programs, computer-executable programs, and modules, such as program instructions/modules (for example, the receiver 910, the first determination module 920 and the second determination module 930 in the resource determining apparatus) corresponding to the device of any embodiment of the present application. The memory 1120 may include a program storage region and a data storage region, where the program storage region may store an operating system and an application program required by at least one function, and the data storage region may store data created depending on the use of the device. Additionally, the memory 1120 may include a high-speed random-access memory and may also include a nonvolatile memory such as at least one magnetic disk memory, a flash memory, or another nonvolatile solid-state memory. In some examples, the memory 1120 may further include memories remotely disposed relative to the processor 1110, and these remote memories may be connected to the device via a network. Examples of the preceding network include, but are not limited to, the Internet, an intranet, a local area network, a mobile communication network, and a combination thereof.

In a case where the communication device is a first communication device, the device may be configured to perform the resource determining method applied to the first communication device according to any preceding embodiment and has corresponding functions and effects. In a case where the communication device is a second communication device, the device may be configured to perform the resource determining method applied to the second communication device according to any preceding embodiment and has corresponding functions and effects.

The embodiments of the present application further provide a storage medium including computer-executable instructions which, when executed by a computer processor, cause the processor to perform a resource determining method applied to a first communication device. The method includes: receiving a PSSCH in a resource pool; determining a mapping relationship between a sub-channel and a PSFCH resource; and determining a PSFCH resource associated with at least one sub-channel included in the received PSSCH based on the mapping relationship between the sub-channel and the PSFCH resource, where one PSFCH resource includes at least one RB within one interlace.

The embodiments of the present application further provide a storage medium including computer-executable instructions which, when executed by a computer processor, cause the processor to perform a resource determining method applied to a second communication device. The method includes: sending a PSSCH in a resource pool; determining a mapping relationship between a sub-channel and a PSFCH resource; and determining a PSFCH resource associated with at least one sub-channel included in the sent PSSCH based on the mapping relationship between the sub-channel and the PSFCH resource, where one PSFCH resource includes at least one RB within one interlace.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

**Claims**

1. A resource determining method, the method being applied to a first communication device and comprising:

   receiving a physical sidelink shared channel (PSSCH) in a resource pool;
   determining a mapping relationship between a sub-channel and a physical sidelink feedback channel (PSFCH) resource; and
   determining a PSFCH resource associated with at least one sub-channel comprised in the received PSSCH based on the mapping relationship between the sub-channel and the PSFCH resource, wherein one PSFCH resource comprises at least one resource block (RB) within one interlace.

2. The method of claim 1, wherein the one interlace comprises one set of RBs distributed at an equal RB interval within one frequency domain range, wherein the one frequency domain range comprises at least one of:

   a plurality of RB sets within a frequency domain range corresponding to one resource pool;
   all RB sets within a frequency domain range corresponding to one resource pool;
   a plurality of RB sets within one bandwidth part (BWP);
   all RB sets within one BWP; or
   one RB set.

3. The method of claim 1, wherein an $\overline{mm}$-th PSFCH resource within the one interlace comprising the at least one RB within the one interlace comprises:
   the $\overline{mm}$-th PSFCH resource within the one interlace comprises [$\overline{mm}$ * $K1$, ($\overline{mm}$ + 1) * $K1$ - 1]-th RBs within the one interlace, wherein $K1$ represents a number of RBs comprised in one PSFCH resource.

4. The method of claim 1, wherein an $\overline{mm}$-th PSFCH resource within the one interlace comprising the at least one RB within the one interlace comprises:
   for an even $\overline{mm}$, the $\overline{mm}$-th PSFCH resource corresponds to $\{I_E \times K1, I_E \times K1 + 1, I_E \times K1 + 2,..., (I_E + 1) \times K1 - 1\}$ -th RBs within an interlace $m$, wherein $I_E = \overline{mm}/2$, and $K1$ represents a number of RBs comprised in one PSFCH resource.

5. The method of claim 1, wherein an $\overline{mm}$-th PSFCH resource within the one interlace comprising the at least one RB within the one interlace comprises:
   the $\overline{mm}$ -th PSFCH resource within the one interlace comprises

   $$\{\overline{mm}, M_{\text{interlace}}^{\text{PSFCH}} + \overline{mm}, 2M_{\text{interlace}}^{\text{PSFCH}} + \overline{mm}, 3M_{\text{interlace}}^{\text{PSFCH}} + \overline{mm}, ..., (K1 - 1) \cdot M_{\text{interlace}}^{\text{PSFCH}} + \overline{mm}\}$$

   -th RBs within the one interlace, wherein $\overline{mm} \in \{0, 1, ..., M_{\text{interlace}}^{\text{PSFCH}} - 1\}$, $K1$ is a positive integer and represents a number of RBs comprised in one PSFCH resource, and $M_{\text{interlace}}^{\text{PSFCH}}$ is a positive integer and represents a number of PSFCH resources comprised within the one interlace.

6. The method of claim 1, wherein determining the mapping relationship between the sub-channel and the PSFCH resource comprising allocating a PSFCH resource to one sub-channel in one slot comprises:
   allocating $[k \cdot M_{\text{subch, slot}}^{\text{PSFCH}}, (k + 1) \cdot M_{\text{subch, slot}}^{\text{PSFCH}} - 1]$ -th PSFCH resources from one set of PSFCH resources to a sub-channel $j$ in a slot $i$, or allocating PSFCH resources numbered $[k \cdot M_{\text{subch, slot}}^{\text{PSFCH}}, (k + 1) \cdot M_{\text{subch, slot}}^{\text{PSFCH}} - 1]$ from one set of PSFCH resources to a sub-channel $j$ in a slot $i$, wherein $k = i + j \cdot N_{\text{PSSCH}}^{\text{PSFCH}}$, $N_{\text{PSSCH}}^{\text{PSFCH}}$ is equal to a period of a PSFCH, and $M_{\text{subch, slot}}^{\text{PSFCH}}$ is a positive integer.

7. The method of claim 1, wherein determining the mapping relationship between the sub-channel and the PSFCH resource comprises allocating at least one PSFCH RB to one sub-channel in one slot, which comprises:
   allocating $[(k) \cdot (M_{\text{subch, slot}}^{\text{PSFCH}} * K1), (k + 1) \cdot (M_{\text{subch, slot}}^{\text{PSFCH}} * K1) - 1]$ -th PSFCH RBs from one set of PSFCH RBs to a sub-channel $j$ in a slot $i$, or allocating PSFCH RBs numbered $[(k) \cdot (M_{\text{subch, slot}}^{\text{PSFCH}} * K1), (k + 1) \cdot (M_{\text{subch, slot}}^{\text{PSFCH}} * K1) - 1]$ from one set of PSFCH RBs to a sub-channel *j* in a slot *i,* wherein $k = i + j \cdot N_{\text{PSSCH}}^{\text{PSFCH}}$, $N_{\text{PSSCH}}^{\text{PSFCH}}$ is equal to a period of a PSFCH, $M_{\text{subch, slot}}^{\text{PSFCH}}$ is a positive integer, and one PSFCH resource comprises *K*1 PSFCH RBs.

8. The method of claim 7, wherein the one set of PSFCH RBs is one set of ordered PSFCH RBs.

9. The method of claim 1, before determining the mapping relationship between the sub-channel and the PSFCH resource, further comprising:
ordering one set of PSFCH RBs according to a preset rule.

10. The method of claim 9, wherein ordering the one set of PSFCH RBs according to the preset rule comprises at least one of:

sequentially ordering all PSFCH RBs within each interlace in one interlace set according to an interleaving order; or
sequentially ordering *K*1 PSFCH RBs within each interlace in one interlace set in ascending order of interlace indices, and performing the ordering once or repeating the ordering a plurality of times.

11. The method of claim 1, wherein determining a mapping relationship between the sub-channel and a number of the PSFCH resource comprising numbering the PSFCH resource according to a preset rule comprises at least one of:

sequentially numbering all PSFCH resources within each interlace in one interlace set according to an interleaving order; or
sequentially numbering one PSFCH resource within each interlace in one interlace set in ascending order of interlace indices, and performing the numbering once or repeating the numbering a plurality of times.

12. The method of claim 1, wherein the one PSFCH resource comprising the at least one RB within the one interlace and a number of the one PSFCH resource and a number of the interlace having a mapping relationship comprise:
a PSFCH resource numbered *mm* among one set of PSFCH resources comprises at least one RB within an interlace *m,* wherein a relationship between *mm* and *m* comprises $m = floor(mm / M_{\text{interlace}}^{\text{PSFCH}})$, $M_{\text{interlace}}^{\text{PSFCH}}$ represents a number of PSFCHs comprised within the one interlace, and *floor*(·) represents rounding down.

13. The method of claim 1, wherein the one PSFCH resource comprising the at least one RB within the one interlace comprises:
a PSFCH resource numbered *mm* among one set of PSFCH resources comprises an $\overline{mm}$-th PSFCH resource within the one interlace, wherein a relationship between *mm* and $\overline{mm}$ comprises $\overline{mm} = mod(mm, M_{\text{interlace}}^{\text{PSFCH}})$, $M_{\text{interlace}}^{\text{PSFCH}}$ represents a number of PSFCH resources comprised within the one interlace, and $mod(mm, M_{\text{interlace}}^{\text{PSFCH}})$ represents a remainder when *mm* which is an integer is divided by $M_{\text{interlace}}^{\text{PSFCH}}$ which is an integer.

14. A resource determining method, the method being applied to a second communication device and comprising:

sending a physical sidelink shared channel (PSSCH) in a resource pool;
determining a mapping relationship between a sub-channel and a physical sidelink feedback channel (PSFCH) resource; and
determining a PSFCH resource associated with at least one sub-channel comprised in the sent PSSCH based on the mapping relationship between the sub-channel and the PSFCH resource, wherein one PSFCH resource comprises at least one resource block within one interlace.

15. A communication device, comprising a memory and at least one processor, wherein

the memory is configured to store at least one program;
when the at least one program is executed by the at least one processor, the at least one processor is caused to perform the resource determining method of any one of claims 1 to 13 or the resource determining method of claim 14.

**16.** A storage medium storing a computer program which, when executed by a processor, causes the processor to perform the resource determining method of any one of claims 1 to 13 or the resource determining method of claim 14.

Receive a PSSCH in a resource pool ~ S110

Determine a mapping relationship between a sub-channel and a PSFCH resource ~ S120

Determine a PSFCH resource associated with at least one sub-channel included in the received PSSCH based on the mapping relationship between the sub-channel and the PSFCH resource, where one PSFCH resource includes at least one resource block within one interlace ~ S130

**FIG. 1**

Send a PSSCH in a resource pool ~ S210

Determine a mapping relationship between a sub-channel and a PSFCH resource ~ S220

Determine a PSFCH resource associated with at least one sub-channel included in the sent PSSCH based on the mapping relationship between the sub-channel and the PSFCH resource, where one PSFCH resource includes at least one resource block within one interlace ~ S230

**FIG. 2**

**FIG. 3**

**FIG. 4**

**FIG. 5**

**FIG. 6**

**FIG. 7**

**FIG. 8**

Resource determining apparatus

910

920

930

| Receiver | First determination module | Second determination module |

**FIG. 9**

Resource determining apparatus

1010

1020

1030

| Sender | First determination module | Second determination module |

**FIG. 10**

Communication device

1120

Memory

Communication module

1130

Processor

1110

**FIG. 11**

**INTERNATIONAL SEARCH REPORT**

| International application No. |
|---|
| **PCT/CN2024/096580** |

**A. CLASSIFICATION OF SUBJECT MATTER**

H04W 72/0453(2023.01)i; H04W 72/04(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, ENTXTC, ENTXT, WPABS, 3GPP: 资源, 物理边链路共享信道, 子信道, 物理边链路反馈信道, 映射, 交织, 资源块, 排序, 带宽部分, 数目, 周期, resource, PSSCH, sub-channel, PSFCH, map, interweave, RB, sequence, BWP, number, period

**C. DOCUMENTS CONSIDERED TO BE RELEVANT**

| Category* | Citation of document, with indication, where appropriate, of the relevant passages | Relevant to claim No. |
|---|---|---|
| PX | CN 117939653 A (ZTE CORP.) 26 April 2024 (2024-04-26)<br>claims 1-16 | 1-16 |
| X | US 2023028000 A1 (SAMSUNG ELECTRONICS CO., LTD.) 26 January 2023 (2023-01-26)<br>description, paragraphs [0027]-[0178] | 1, 2, 9-11, 14-16 |
| X | CN 115915397 A (VIVO COMMUNICATION TECHNOLOGY CO., LTD.) 04 April 2023<br>(2023-04-04)<br>description, paragraphs [0038]-[0335] | 1, 2, 9-11, 14-16 |
| A | CN 112840584 A (GUANGDONG OPPO MOBILE TELECOMMUNICATIONS CORP.,<br>LTD.) 25 May 2021 (2021-05-25)<br>entire document | 1-16 |
| A | CAICT. "On PSFCH of NR Sidelink"<br>*3GPP tsg_ran\wg1_rl1. R1-2001045,* 14 February 2020 (2020-02-14),<br>entire document | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 September 2024** | **06 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096580**

| Patent document cited in search report | | | Publication date (day/month/year) | Patent family member(s) | | | Publication date (day/month/year) |
|---|---|---|---|---|---|---|---|
| CN | 117939653 | A | 26 April 2024 | None | | | |
| US | 2023028000 | A1 | 26 January 2023 | EP | 4356670 | A1 | 24 April 2024 |
| | | | | KR | 20240035475 | A | 15 March 2024 |
| | | | | WO | 2023003221 | A1 | 26 January 2023 |
| CN | 115915397 | A | 04 April 2023 | None | | | |
| CN | 112840584 | A | 25 May 2021 | BR | 112022001019 | A2 | 12 April 2022 |
| | | | | AU | 2020335057 | A1 | 03 February 2022 |
| | | | | WO | 2021037235 | A1 | 04 March 2021 |
| | | | | EP | 3970296 | A1 | 23 March 2022 |
| | | | | EP | 3970296 | A4 | 13 July 2022 |
| | | | | EP | 3970296 | B1 | 27 September 2023 |
| | | | | JP | 2022545854 | A | 01 November 2022 |
| | | | | EP | 4254850 | A2 | 04 October 2023 |
| | | | | EP | 4254850 | A3 | 06 December 2023 |
| | | | | EP | 4254850 | B1 | 31 July 2024 |
| | | | | KR | 20220054246 | A | 02 May 2022 |
| | | | | US | 2022110097 | A1 | 07 April 2022 |

Form PCT/ISA/210 (patent family annex) (July 2022)